# EUROPÄISCHE PATENTSCHRIFT

(11) **EP 1 121 609 B1**
(45) Veröffentlichungstag und Bekanntmachung des Hinweises auf die Patenterteilung: **16.04.2003**
(21) Anmeldenummer: 99947480.2
(22) Anmeldetag: 07.10.1999
(51) Int. Cl.: G01W 1/17

(54) **VORRICHTUNG ZUR MESSUNG DER GEFÜHLTEN TEMPERATUR**
DEVICE FOR MEASURING EFFECTIVE TEMPERATURE
DISPOSITIF POUR MESURER LA TEMPERATURE EFFECTIVE

(30) Priorität: 12.10.1998 DE 19846970
(43) Veröffentlichungstag der Anmeldung: 08.08.2001
(73) Patentinhaber: Trilog Thermotechnik GmbH, 37586 Dassel-Amelsen (DE)
(72) Erfinder: RENGSHAUSEN, Detlef, D-37586 Dassel-Amelsen (DE); RENGSHAUSEN-FISCHBACH, Bodo, D-37586 Dassel-Amelsen (DE)
(74) Vertreter: Eisenführ, Speiser & Partner
(86) Internationale Anmeldenummer: EP9907537
(87) Internationale Veröffentlichungsnummer: WO00022457

(56) Entgegenhaltungen:
- EP-A- 0 214 294
- DE-A- 3 611 084
- US-A- 4 504 157

## Beschreibung

Die Erfindung betrifft eine Vorrichtung zur Messung der gefühlten Temperatur eines Gases, insbesondere von Luft, welche mindestens von der Strömungsgeschwindigkeit und der Feuchtigkeit des Gases abhängt, mit einem Gehäuse mit einer wärmeleitfähiges und elektrisch leitendes Material aufweisenden Wandung, die das Innere des Gehäuses von der äußeren Umgebung im Wesentlichen trennt, einem innerhalb des Gehäuses angeordneten Thermoelement und einer innerhalb des Gehäuses angeordneten Heizeinrichtung.

Es ist allgemein bekannt, daß die objektiv gemessene Temperatur eines Gases bzw. Gasgemisches wie insbesondere der Luft nicht immer mit der subjektiv "gefühlten" Temperatur übereinstimmt. Faktoren wie insbesondere die Gasgeschwindigkeit bzw. Windstärke und die Feuchtigkeit beeinflussen die subjektive Empfindung der Temperatur.

EP-A-0 214 294 beschreibt eine Vorrichtung zur Messung der gefühlten Temperatur bestehend aus einem kugelförmigen Gehäuse aus elektrisch leitendem und wärmeleitfähigem Material. Im Inneren des Gehäuses ist eine Heizeinrichtung vorgesehen, welche ungefähr auf der Temperatur des menschlichen Körpers gehalten ist. An der Gehäuseinnenwand ist in Form eines Thermoelements ein Temperatursensor vorgesehen, welcher die Temperatur der Gehäusewand mißt, die auch von der Windgeschwindigkeit und der Luftfeuchtigkeit in der Umgebung beeinflußt ist.

In dieser bekannten Vorrichtung wird die Temperatur nur an einer Stelle der Gehäusewand gemessen, so daß singuläre Fehler bei der Messung der Temperatur auftreten können.

Es ist daher Aufgabe der Erfindung eine Vorrichtung der eingangs genannten Art mit einer zuverlässigeren Temperaturmessung zu versehen.

Diese Aufgabe wird bei einer Vorrichtung der eingangs genannten Art dadurch gelöst, daß sich das Ende des einen Drahtes des Thermoelementes an einer ersten Stelle mit der Innenseite der Gehäusewandung und das Ende des anderen Drahtes des Thermoelementes an einer von der ersten Stelle beabstandeten zweiten Stelle mit der Innenseite der Gehäusewandung in Kontakt befindet und das Thermoelement aus den an den beiden Stellen gemessenen Temperaturwerten einen Mittelwert bildet.

Außerdem bietet die Erfindung einen einfachen und somit kostensparenden Aufbau, so daß der Einsatz der erfindungsgemäßen Vorrichtung gerade bei kostenkritischen Anwendungen Vorteile bietet.

Die erfindungsgemäße Anordnung arbeitet wie folgt. Durch die Heizeinrichtung wird das Innere des Gehäuses erwärmt, so daß sich am innerhalb des Gehäuses angeordneten Thermoelement eine gewisse Temperatur einstellt. Unter der Annahme einer durch die Heizeinrichtung gegenüber der Umgebungstemperatur erzeugten und im wesentlichen konstant gehaltenen Temperaturdifferenz wird die am Thermoelemt gemessene Temperatur um so höher, je höher die Umgebungstemperatur außerhalb des Gehäuses ist, und um so geringer, je niedriger die Umgebungstemperatur ist. In Abhängigkeit von der Windgeschwindigkeit des das Gehäuse umgebenden Gases bzw. der Luft wird die Gehäusewandung entsprechend abgekühlt, da der Wind in Abhängigkeit von seiner Geschwindigkeit mehr oder weniger Energie und somit Wärme durch die wärmeleitfähig ausgebildete Gehäusewandung aus dem Inneren des Gehäuses herauszieht. In gleicher Weise beeinflußt die Umgebungsfeuchtigkeit die Temperatur im Inneren des Gehäuses. Da nämlich die an der Außenseite der Gehäusewandung niedergeschlagene Feuchtigkeit bestrebt ist zu verdunsten, wird Verdunstungsenergie benötigt, die über die wärmeleitfähige Gehäusewandung dem Inneren des Gehäuses entzogen wird. Beide Effekte, die kumuliert auftreten können, bewirken eine Reduzierung der vom Thermoelement im Inneren des Gehäuses gemessenen Wärme, so daß das Thermoelement diesen Einflüssen direkt ausgesetzt ist und somit einen Temperaturwert abgibt, der im wesentlichen der "gefühlten" Temperatur entspricht und von einer gegebenenfalls nachgeschalteten Auswerteeinrichtung entsprechend verarbeitet werden kann. Somit ist es möglich, gleichzeitig mit der Temperatur auch zumindest die diese beeinflussenden wichtigsten Parameter wie Windgeschwindigkeit und Feuchtigkeit zu erfassen und für die "gefühlte" Temperatur nur ein einziges relevantes Signal zu erzeugen, welches in einer nachgeschalteten Auswerteeinrichtung verarbeitet und angezeigt werden kann.

Vorzugsweise ist die Außenseite der Wandung des Gehäuses im wesentlichen mit einer hydrophilen Schicht aus feuchtigkeitsaufnahmefähigem Material bedeckt, um die an der Außenseite der Gehäusewandung niedergeschlagene Feuchtigkeit effektiver speichern zu können. Gerade dieser Ausführung lag der Gedanke zugrunde, die Gehäusewandung der menschlichen Haut hinsichtlich der Empfindsamkeit für Temperatur und die diese beeinflussenden Parameter wie insbesondere die Feuchtigkeit mit einfachen Mitteln so weit wie möglich nachzubilden. Um einen für die Messung geeigneten Grad an Feuchtigkeit aufnehmen zu können, sollte die hydrophile Schicht aus textilem Stoff, insbesondere Filzstoff, bestehen. Dabei sollte der Stoff zweckmäßigerweise so gewählt werden, daß er hinsichtlich seiner Wärmeund Feuchtigkeitsaufnahmeeigenschaften die menschliche Haut nachbildet.

Da mit der erfindungsgemäßen Vorrichtung zumindest unter anderem die Messung der an der menschlichen Haut gefühlten Temperatur beabsichtigt ist, könnte beispielsweise die Heizeinrichtung Wärme abstrahlen, deren Temperatur etwa der durchschnittlichen menschlichen Körpertemperatur entspricht. Hiernach könnte die Heizeinrichtung zweckmäßigerweise so gesteuert bzw. eingestellt werden, daß aufgrund der von der Heizeinrichtung innerhalb des Gehäuses erzeugten Wärme der Temperatursensor einen Temperaturwert mißt, der etwa der durchschnittlichen menschlichen Körpertemperatur entspricht, wenn idealerweise weder eine Beeinflussung durch die außerhalb des Gehäuses herrschende Umgebungstemperatur (entspricht dem Zustand einer idealen Isolierung des Gehäuses gegenüber der Umgebung) noch eine Beeinflussung durch Geschwindigkeit (Windstärke) und Feuchtigkeit eines das Gehäuse umgebenden Gases, insbesondere der Luft, (also Geschwindigkeit = 0 und Feuchtigkeit = 0) vorherrscht. Insoweit handelt es sich bei einem solchen Temperaturwert um einen Bezugswert, der den von der Umgebung idealerweise völlig unbeeinflußten Zustand der erfindungsgemäßen Meßvorrichtung angibt, wobei also die die gemessene Temperatur beeinflussenden Parameter praktisch ausgeblendet werden. Alternativ ist aber auch denkbar, die Heizeinrichtung in einer Situation einzustellen, in der die (objektiv) gemessene Temperatur der (subjektiv) gefühlten Temperatur entspricht; hierzu gibt es festgelegte Kriterien, die dann zu beachten sind. Im übrigen kann in Abhängigkeit vom gewünschten Anwendungsfall selbstverständlich auch ein anderer Bezugswert als der Wert der durchschnittlichen menschlichen Körpertemperatur gewählt werden.

Um eine punktuelle Aufheizung der Gehäusewandung zu vermeiden, sondern eine möglichst gleichmäßige Wärmeverteilung innerhalb des Gehäuses zu realisieren, sollte die Heizeinrichtung in einem Abstand zur Wandung des Gehäuses angeordnet sein.

Vorzugsweise sollte das Gehäuse mit einem, insbesondere aus Gießmasse bestehenden, Füllstoff gefüllt sein. Auf diese Weise ist es möglich, die Wärmeübertragungs- bzw. Wärmeleiteigenschaften im Inneren des Gehäuses zu verbessern bzw. auf den gewünschten Anwendungsfall einzustellen, indem für den Füllstoff Material mit den gewünschten Wärmeleiteigenschaften gewählt wird.

Das Gehäuse kann als, insbesondere zylindrisches, Rohr ausgebildet sein, wodurch zum einen eine besonders hohe mechanische Steifigkeit und zum anderen ein besonders günstiges Verhältnis zwischen der Oberfläche und dem Innenraumvolumen erzielt werden kann.

Der Temperatursensor erzeugt gewöhnlich Signale und gibt diese an eine Auswerteeinrichtung zur Auswertung und Anzeige des gemessenen Temperaturwertes ab.

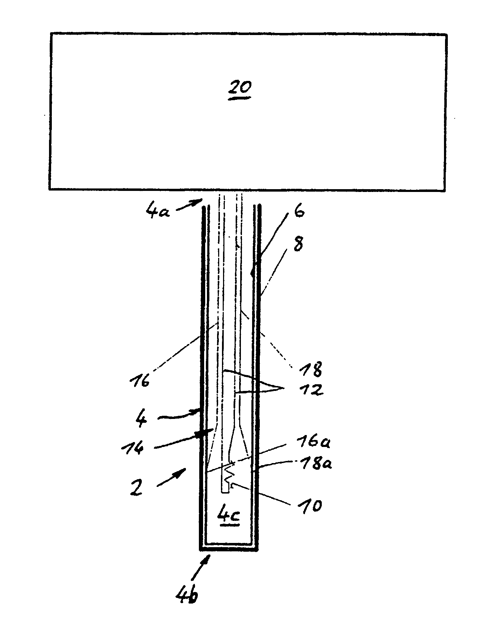

Nachfolgend wird ein bevorzugtes Ausführungsbeispiel anhand der einzigen Figur näher erläutert, in der die Vorrichtung zur Messung der gefühlten Temperatur in einer bevorzugten Ausführung schematisch dargestellt ist.

In der beiliegenden einzigen Figur ist in einer besonderen bevorzugten Ausführung schematisch eine Meßvorrichtung 2 zur Messung der gefühlten Temperatur dargestellt. Die Meßvorrichtung 2 mißt in nachfolgend noch näher beschriebener Weise die gefühlte Temperatur, erzeugt aus den gemessenen Werten elektrische Signale und überträgt diese an eine Auswerteeinheit 20.

Die Meßvorrichtung weist ein Gehäuse 4 auf, das in der dargestellten Ausführung länglich ausgebildet ist, eine zylindrische Form besitzt, also als Rohr ausgebildet ist, und mit seinem einen Ende 4a benachbart zur Auswerteeinheit 20 angeordnet ist. Ferner ist in der dargestellten Ausführung das eine Ende 4a des Gehäuses 4 fest mit dem Gehäuse der Auswerteeinheit 20 verbunden, so daß keine langen Anschlußleitungen benötigt werden. Das gegenüberliegende freie Ende 4b des rohrförmigen Gehäuses 4 kann wahlweise offen oder geschlossen sein. Selbstverständlich sind auch eine andere Form und eine andere Anordnung des Gehäuses 4 denkbar.

Die Wandung 6 des Gehäuses 4 besteht aus einem Material, das sowohl gute Wärmeleiteigenschaften als auch gute elektrische Leiteigenschaften besitzt. Dies ist vorzugsweise dann der Fall, wenn die Gehäusewandung 6 aus Metall besteht.

Die Außenfläche der Gehäusewandung 6 ist mit einer hydrophilen Außenschicht 8 bedeckt. Diese Außenschicht 8 besteht gewöhnlicherweise aus textilem Material, insbesondere Filzstoff. Auf jeden Fall sollte die Außenschicht 8 aus einem Material bestehen, dessen Feuchtigkeitsaufnahmeeigenschaft im wesentlichen der der menschlichen Haut entspricht.

Das rohrförmige Gehäuse 4 umschließt einen Innenraum 4c, in dem ein Heizelement 10 angeordnet ist. In der dargestellten Ausführung besteht das Heizelement 10 aus einem Heizdraht bzw. einem Heizwiderstand. Es ist aber auch der Einsatz von anderen Arten eines Heizelementes denkbar. Zweckmäßigerweise sollte das Heizelement aber elektrisch betrieben werden, indem es über Anschlußleitungen 12 an der Auswerteeinheit 20 angeschlossen ist, die eine (in der Figur nicht näher dargestellte) Steuerung zur Ansteuerung des Heizelementes 10 enthält.

Ferner ist im Innenraum 4c des Gehäuses 4 ein Temperatursensor 14 angeordnet, der als Thermoelement mit zwei Drähten 16, 18 aus unterschiedlichem Material ausgebildet ist. Überlicherweise besteht der eine Draht 16 aus einer Nickel-Chrom-Legierung und der andere Draht 18 aus Nickel. Die beiden Drähte 16, 18 führen zur Auswerteeinheit 20, um die gemessenen Signale dorthin zu übertragen.

Im Gegensatz zu herkömmlichen Thermoelementen sind die beiden Drähte 16, 18 an ihren freien Enden 16a, 18a nicht zur Bildung eines einzigen Meßpunktes miteinander verbunden, sondern befinden sich getrennt und in einem Abstand voneinander jeweils in Kontakt mit der Innenfläche der Gehäusewandung 6, und zwar vorzugsweise in gegenüberliegender Anordnung, wie die Figur erkennen läßt. Elektrisch sind die beiden freien Enden 16a, 18a über die elektrisch leitende Gehäusewandung 6 miteinander gekoppelt, wodurch die Funktionsfähigkeit als Thermoelement gewährleistet wird. Gleichwohl werden mit dieser besonderen Anordnung zwei Meßpunkte realisiert, nämlich ein erster Meßpunkt an der Kontaktstelle des freien Endes 16a des einen Drahtes 16 mit der Gehäusewandung 6 und ein zweiter Meßpunkt an der vom ersten Meßpunkt beabstandeten Kontaktstelle des freien Endes 18a des anderen Drahtes 18 mit der Gehäusewandung 6. Durch die elektrisch leitende Verbindung der freien Enden 16a, 18a der beiden Drähte 16, 18 miteinander über die elektrisch leitende Gehäusewandung 6, deren ohmscher Widerstand nahezu null ist, erzeugt der in der dargestellten Ausführung als Thermoelement ausgebildete Temperatursensor 14 aufgrund eines von der gemessenen Temperatur abhängigen Spannungsabfalls zwischen den beiden Drähten 16, 18 ein elektrisches Signal, das etwa den Mittelwert aus den an beiden Meßpunkten herrschenden Temperaturwerten angibt. Das so auf den Drähten 16, 18 erzeugte, den gemessenen Temperaturwert angebende Signal wird an die Auswerteeinheit 20 übertragen.

Ferner ist es alternativ auch denkbar, mehr als zwei Temperaturmeßpunkte vorzusehen, wobei im letzteren Fall wieder eine Mittelwertbildung durchgeführt wird.

Die Wärmeleitfähigkeit im Innenraum 4c des Gehäuses 4 wird allerdings durch einen in der Figur nicht kenntlich gemachten Füllstoff erhöht, mit dem in der beschriebenen Ausführung der Innenraum 4c des Gehäuses 4 ausgefüllt ist. Durch spezielle Wahl des als Füllstoff zu verwendenden Materials mit einer spezifischen Wärmeleitfähigkeit können dem Innenraum 4c des Gehäuses 4 die gewünschten Wärmeübertragungseigenschaften gegeben werden. Vorzugsweise sollte das Material für den Füllstoff so gewählt werden, daß die Wärmeübertragungseigenschaften des Innenraums 4c des Gehäuses 4 etwa denen der menschlichen Haut entsprechen.

Die Auswerteeinheit 20 wertet die Signale vom Temperatursensor 14 aus und zeigt diese beispielsweise auf einer (in der Figur nicht dargestellten) Anzeigeeinrichtung an.

Nachfolgend wird die Funktionsweise der Meßvorrichtung 2 beschrieben.

Das Heizelement 10 wird von der in der Auswerteeinheit 20 enthaltenen Steuerung angesteuert und erwärmt den Innenraum 4c des Gehäuses 4 bzw. den darin befindlichen Füllstoff. So stellt sich eine gewisse Temperatur an den von den freien Enden 16a, 18a der beiden Drähte 16, 18 gebildeten Meßpunkte ein. Beispielsweise könnte das Heizelement 10 auf die Abgabe einer solchen bestimmten Wärmemenge eingestellt bzw. geregelt werden, daß sich für den Fall, daß die Meßvorrichtung 2 von jeglichen äußeren Umwelteinflüssen wie insbesondere Temperatur, Windgeschwindigkeit und Feuchtigkeit nicht berührt wird, an den Meßpunkten des Temperatursensors eine Temperatur einstellt, die etwa der menschlichen Körpertemperatur entspricht. Bei einer solchen Einstellung des Heizelementes sollten daher die die objektiv gemessene Temperatur beeinflussenden Parameter möglichst weitgehend ausgeblendet werden. Alternativ ist es natürlich auch denkbar, die Einstellung des Heizelementes 10 dann vorzunehmen, wenn die objektiv gemessene Temperatur der gefühlten Temperatur entspricht, wozu bestimmte festgelegte Kritierien zu berücksichtigen bzw. einzuhalten sind. Selbstverständlich kann als Bezugsgröße auch ein anderer Temperaturwert als der des menschlichen Körpers gewählt werden.

Diese Temperaturmessung wird nun von der Temperatur der das Gehäuse 4 der Meßvorrichtung 2 umgebenden Luft beeinflußt. Hierfür ist die gute Wärmeleitfähigkeit der Gehäusewandung 6 verantwortlich. Demnach wird die Temperatur an den Meßpunkten größer, je wärmer die umgebende Luft ist, und kleiner, wenn die umgebende Luft kälter wird. Falls sich die Luft bewegt, also Wind herrscht, zieht der Wind je nach Windgeschwindigkeit mehr oder weniger Wärme aus dem Inneren 4c des Gehäuses 4 ab, so daß die Windgeschwindigkeit ebenfalls einen Einfluß auf die an den Meßpunkten gemessene Temperatur hat.

Einen ähnlichen Einfluß hat die Luftfeuchtigkeit. Diesbezüglich kommt die hydrophile Außenschicht 8 auf der Außenfläche der Gehäusewandung 6 zur Wirkung. Diese hydrophile Außenschicht 8 nimmt nämlich in Abhängigkeit von der umgebenden Feuchtigkeit mehr oder weniger Feuchtigkeit auf. Dadurch erhöht sich die Wärmeableitung aus dem Inneren 4c des Gehäuses 4. Da feuchte Luft eine größere Wärmeableitung als trockene Luft bewirkt, hat die Feuchtigkeit ebenfalls einen Einfluß auf die zu messende Temperatur.

Im Endergebnis mißt der Temperatursensor 14 einen Temperaturwert, der nicht nur von der Außentemperatur abhängt, sondern auch von der Windgeschwindigkeit und der Feuchtigkeit der umgebenden Luft. Aufgrund der zuvor beschriebenen Konstruktion findet die Messung der so beeinflußten Temperatur, bei der es sich um die gefühlte Temperatur handelt, direkt statt. Das Ausgangssignal des Temperatursensors 14 repräsentiert demnach direkt die gemessene gefühlte Temperatur, die in der nachgeschalteten Auswerteeinheit 20 nur noch entsprechend verarbeitet und beispielsweise angezeigt zu werden braucht.

## Patentansprüche

1. Vorrichtung zur Messung der gefühlten Temperatur eines Gases, insbesondere von Luft, welche mindestens von der Strömungsgeschwindigkeit und der Feuchtigkeit des Gases abhängt, mit
- einem Gehäuse (4) mit einer wärmeleitfähiges und elektrisch leitendes Material aufweisenden Wandung (6), die das Innere (4c) des Gehäuses (4) von der äußeren Umgebung im Wesentlichen trennt,
- einem innerhalb des Gehäuses (4) angeordneten Thermoelement (14) und
- einer innerhalb des Gehäuses (4) angeordneten Heizeinrichtung (10),
**dadurch gekennzeichnet, daß**
- sich das Ende (16a) des einen Drahtes (16) des Thermoelementes (14) an einer ersten Stelle mit der Innenseite der Gehäusewandung (6) und das Ende (18a) des anderen Drahtes (18) des Thermoelementes (14) an einer von der ersten Stelle beabstandeten zweiten Stelle mit der Innenseite der Gehäusewandung (6) in Kontakt befindet und das Thermoelement (14) aus den an den beiden Stellen gemessenen Temperaturwerten einen Mittelwert bildet.

2. Vorrichtung nach Anspruch 1,
**dadurch gekennzeichnet, daß** die Außenseite der Wandung (6) des Gehäuses (4) im wesentlichen mit einer hydrophilen Schicht (8) aus feuchtigkeitsaufnahmefähigem Material bedeckt ist.

3. Vorrichtung nach Anspruch 2,
**dadurch gekennzeichnet, daß** die hydrophile Schicht (8) aus textilem Stoff, insbesondere Filzstoff, besteht.

4. Vorrichtung nach mindestens einem der Ansprüche 1 bis 3,
**dadurch gekennzeichnet, daß** die Heizeinrichtung (10) Wärme abstrahlt, deren Temperatur etwa der durchschnittlichen menschlichen Körpertemperatur entspricht.

5. Vorrichtung nach mindestens einem der Ansprüche 1 bis 4,
**dadurch gekennzeichnet, daß** die Heizeinrichtung (10) in einem Abstand zur Wandung (6) des Gehäuses (4) angeordnet ist.

6. Vorrichtung nach mindestens einem der Ansprüche 1 bis 5,
**dadurch gekennzeichnet, daß** die Heizeinrichtung (10) zwischen den ersten und zweiten Stellen angeordnet ist.

7. Vorrichtung nach mindestens einem der Ansprüche 1 bis 6,
**dadurch gekennzeichnet, daß** das Gehäuse (4) mit einem, insbesondere aus Gießmasse bestehenden, Füllstoff gefüllt ist.

8. Vorrichtung nach mindestens einem der Ansprüche 1 bis 7,
**dadurch gekennzeichnet, daß** das Gehäuse (4) als, insbesondere zylindrisches, Rohr ausgebildet ist.

9. Vorrichtung nach mindestens einem der Ansprüche 1 bis 8,
**dadurch gekennzeichnet, daß** der Temperatursensor (14) Signale erzeugt und an eine Auswerteeinrichtung (20) zur Auswertung dieser Signale und Anzeige des gemessenen Temperaturwertes abgibt.

## Claims

1. Device for measuring the sensed temperature of a gas, in particular of air, which is a function at least of the flow velocity and the humidity of the gas, comprising
- a housing (4) with a wall (8) which has a thermally conductive and electrically conducting material and which substantially separates the interior (4c) of the housing (4) from the external surroundings,
- a thermoelement (14) arranged inside the housing (4), and
- a heating device (10) arranged inside the housing (4),
**characterized in that**
- the end (16a) of one wire (16) of the thermoelement (14) is in contact at a first location with the inside of the housing wall (6), and the end (18a) of the other wire (18) of the thermoelement (14) is in contact at a second location, at a spacing from the first location, with the inside of the housing wall (6) and the thermoelement (14) forms a mean value from the temperature values measured at the two locations.

2. Device according to Claim 1, **characterized in that** the outside of the wall (6) of the housing (4) is substantially covered with a hydrophilic layer (8) made from humidity-absorbing material.

3. Device according to Claim 2, **characterized in that** the hydrophilic layer (8) consists of fabric, in particular felt material.

4. Device according to at least one of Claims 1 to 3, **characterized in that** the heating device (10) emits heat whose temperature corresponds approximately to the average human body temperature.

5. Device according to at least one of Claims 1 to 4, **characterized in that** the heating device (10) is arranged at a spacing from the wall (6) of the housing (4).

6. Device according to at least one of Claims 1 to 5, **characterized in that** the heating device (10) is arranged between the first and second locations.

7. Device according to at least one of Claims 1 to 6, **characterized in that** the housing (4) is filled with a filler, in particular consisting of casting compound.

8. Device according to at least one of Claims 1 to 7, **characterized in that** the housing (4) is constructed as a tube, in particular a cylindrical one.

9. Device according to at least one of Claims 1 to 8, **characterized in that** the temperature sensor (14) generates signals and outputs them to an evaluation device (20) for evaluating these signals and displaying the measured temperature value.

## Revendications

1. Dispositif pour mesurer la température effective d'un gaz, en particulier de l'air, laquelle dépend au moins de la vitesse d'écoulement et de l'humidité du gaz, avec
- un boîtier (4) avec une paroi (6) présentant un matériau thermoconducteur et électroconducteur, qui sépare essentiellement l'intérieur (4c) du boîtier (4) de l'environnement extérieur,
- un thermoélément (14) agencé à l'intérieur du boîtier (4) et
- un dispositif de chauffage (10) agencé à l'intérieur du boîtier (4), **caractérisé en ce que**
- l'extrémité (16a) d'un premier fil (16) du thermoélément (14) se trouve en contact en un premier emplacement avec la face intérieure de la paroi du boîtier (6) et **en ce que** l'extrémité (18a) de l'autre fil (18) du thermoélément (14) en un second emplacement et distant du premier élément se trouve en contact avec la face intérieure de la paroi du boîtier (6) et **en ce que** le thermoélément (14) forme une valeur moyenne à partir des valeurs de température mesurées sur les deux emplacements.

2. Dispositif selon la revendication 1, **caractérisé en ce que** la face extérieure de la paroi (6) du boîtier (4) est essentiellement recouverte d'une couche hydrophile (8) en matériau absorbant l'humidité.

3. Dispositif selon la revendication 2, **caractérisé en ce que** la couche hydrophile (8) se compose de matière textile, en particulier de feutre.

4. Dispositif selon au moins l'une des revendications 1 à 3, **caractérisé en ce que** le dispositif de chauffage (10) rayonne de la chaleur, dont la température correspond approximativement à la température corporelle moyenne humaine.

5. Dispositif selon au moins l'une des revendications 1 à 4, **caractérisé en ce que** le dispositif de chauffage (10) est agencé à une certaine distance de la paroi (6) du boîtier (4).

6. Dispositif selon au moins l'une des revendications 1 à 5, **caractérisé en ce que** le dispositif de chauffage (10) est agencé entre les premier et second emplacements.

7. Dispositif selon au moins l'une des revendications 1 à 6, **caractérisé en ce que** le boîtier (4) est rempli d'une matière de remplissage, en particulier d'une masse coulée.

8. Dispositif selon au moins l'une des revendications 1 à 7, **caractérisé en ce que** le boîtier (4) est formé comme un tube, en particulier comme un tube cylindrique.

9. Dispositif selon au moins l'une des revendications 1 à 8, **caractérisé en ce que** le capteur de température (14) produit des signaux et les transmet à un dispositif d'évaluation (20) pour évaluer ces signaux et pour présenter la valeur de température mesurée.
